# EUROPEAN PATENT SPECIFICATION

(11) **EP 4 537 958 B1**
(45) Date of publication and mention of the grant of the patent: **04.11.2026**
(21) Application number: 23913860.5
(22) Date of filing: 21.09.2023
(51) Int. Cl.: B22F 12/00, B22F 10/28, B22F 12/70, B33Y 30/00, B33Y 40/20, B22F 10/32

(54) **ADDITIVE MANUFACTURING APPARATUS**
VORRICHTUNG ZUR GENERATIVEN FERTIGUNG
APPAREIL DE FABRICATION ADDITIVE

(30) Priority: 28.08.2023 CN 202311091544; 28.08.2023 CN 202322323357 U
(43) Date of publication of application: 16.04.2025
(73) Proprietor: Suzhou Dewoo3D Technology Co., Ltd, Kunshan, Jiangsu 215316 (CN)
(72) Inventor: SHI, Shuoqing, Kunshan, Jiangsu 215316 (CN); LIU, Jianrui, Kunshan, Jiangsu 215316 (CN); WANG, Fei, Kunshan, Jiangsu 215316 (CN); CAO, Xiaozhou, Kunshan, Jiangsu 215316 (CN)
(74) Representative: Murgitroyd & Company
(86) International application number: PCT/CN2023/120232
(87) International publication number: WO 2025/043790

(56) References cited:
- EP-A1- 3 476 972
- CN-A- 109 895 400
- CN-A- 111 036 903
- CN-A- 111 734 948
- CN-A- 112 658 289
- CN-A- 115 625 774
- DE-A1- 102018 202 644
- GB-A- 2 569 520
- US-A1- 2020 023 436

## Description

### TECHNICAL FIELD

The present disclosure relates to the technical field of additive manufacturing, and specifically, to an additive manufacturing apparatus.

### BACKGROUND

Additive manufacturing technology (or 3D printing technology) uses high-energy beams to process powdered materials to print three-dimensional objects in specified shapes. After one object has been printed and before the next one is to be printed, it is usually necessary to take the finished object out of a build chamber and perform gas purification inside the build chamber using a gas purification device. In the related art, the gas purification stage takes a long time, resulting in low apparatus utilization.

According to GB 2 569 520 A, there is provided a method for inertization of a chamber of a machine for additive production of components, in particular a LMF or SLS machine, comprising the following method steps: a. expanding an expansion body in the chamber, when a chamber outlet is opened, by filling the expansion body with a pressure fluid in order to displace the gas volume located in the chamber out of the chamber, at least in part, in particular completely, through the chamber outlet; and b. subsequently filling the chamber with an inert gas through an opened chamber inlet while simultaneously emptying the expansion body. The associated machine according to the invention has an expansion body, which can be filled with pressure fluid and can be expanded in the chamber and which, in an expanded position in the chamber, fills the available free volume in the chamber at least in part, in particular completely.

According to DE 10 2018 202644 A1, there is provided a method for inerting a process chamber of a machine for producing three-dimensional components by selectively solidifying a powder material applied layer by layer in the process chamber, by means of an energy beam acting on the powder material, which method comprises the following method steps: a) reducing the volume of the process chamber by moving at least one sealed machine component delimiting the process chamber into the process chamber; and b) subsequently filling the volume-reduced process chamber with an inert gas and moving the at least one machine component back.

According to CN 111 734 948 A, there are provided a gas replacement device, a three-dimensional printing equipment and a gas replacement method. The gas replacement device comprises a cabin body, a gas source, an elastic expansion and retraction element, a first control valve and a second control valve; the cabin body is hollow and a chamber is formed in the cabin body; the elastic expansion and retraction element is accommodated in the chamber; the first control valve and the second control valve are both provided with at least three communication ports; the first communication port of the first control valve is connected with the gas source; the second communication port of the first control valve is connected with the elastic expansion and retraction element; the third communication port of the first control valve is connected to the fourth communication port of the second control valve; the fifth communication port of the second control valve communicates with the chamber of the cabin body; the sixth communication port of the second control valve communicates with the outside; and the first control valve and the second control valve can control the elastic expansion and retraction element to expand and retract in the chamber so as to replace the gas in the gas source into the chamber.

According to EP 3 476 972 A1, there is provided a method for purging a process chamber, comprising at least the following steps: a) providing a purging section within the process chamber such that a volume of the purging section is smaller than a total volume of the process chamber, and b) introducing a purging gas into the purging section of the process chamber. With the provided method a process chamber can be purged with a purging gas such as nitrogen and/or argon at a particularly low consumption of the purging gas and/or with a particularly short purging time. This can be achieved by introducing the purging gas into a small purging section of the process chamber, whereby the volume of the purging section is increased.

### SUMMARY

The invention provides an additive manufacturing apparatus to reduce the time that the gas purification spends and improve apparatus utilization.

The invention and preferred embodiments are defined in the appended set of claims.

Compared with the additive manufacturing stage, the build chamber has a smaller volume during the gas purification stage, so that the time spent on the gas purification can be shortened and the apparatus utilization can be improved.

### BRIEF DESCRIPTION OF THE DRAWINGS

FIG. 1 is a schematic structural diagram of an additive manufacturing apparatus according to an embodiment of this application.
FIG. 2 is a structural diagram of a variable-volume build chamber according to an embodiment of this application.
FIG. 3 is a structural diagram of the variable-volume build chamber according to another embodiment of this application.
FIG. 4 is a structural diagram of the variable-volume build chamber according to another embodiment of this application.

### DETAILED DESCRIPTION OF THE EMBODIMENTS

Additive manufacturing technology can also be called 3D printing technology. Compared with traditional manufacturing technology, additive manufacturing technology can produce multi-dimensional structures with complex shapes, and therefore is widely studied and highly popular .

There are many types of additive manufacturing technologies, such as an additive manufacturing technology based on material extrusion and an additive manufacturing technology based on, for example, metal powder and a high-energy beam. Metal selective laser melting technology is a typical additive manufacturing technology based on metal powder and a high-energy beam. The metal selective laser melting technology is taken as an example below to briefly describe an additive manufacturing process.

The metal selective laser melting technology uses metal powder as a raw material to construct a complex multi-dimensional structure. The powdered material is melted by focusing high-energy light beams and then solidified into a shape to obtain a specified spatial part. The additive manufacturing process is usually carried out in an enclosed build chamber. After one object is finished, it is necessary to take out the finished object, reload the metal powder, and close a chamber door to keep the build chamber sealed again. Before the next printing starts, it is often necessary to discharge air out of the build chamber to ensure that elements, such as oxygen, that need to be controlled in the build chamber are within a controllable range. This air removal process is also called gas purification. For example, inert gas is injected into the build chamber to provide the build chamber with an inert gas atmosphere, or the gas in the build chamber may be sucked by a vacuum apparatus to remove the air in the build chamber. After the gas purification is completed, an additive manufacturing stage starts, to carry out further processing processes such as powder spreading and laser scanning.

In order to ensure that the gas in the build chamber meets the specified requirements, the gas purification process often needs to be repeated many times. During the gas purification stage, the entire apparatus is on standby (that is, 3D printing or additive manufacturing is suspended), until all impurity elements that need to be controlled have in the required state, which results in low apparatus utilization.

Whether the gas content meets the standard will directly affect the quality of the printed object. If the quality of the object does not meet the standard due to shortening the gas purification time, the loss will outweigh the gain. Therefore, it is generally believed in the related art that a time-consuming gas purification stage is necessary.

It is certain that the apparatus utilization should not be improved at the expense of the quality of gas purification. However, it is possible to shorten duration of the gas purification stage while ensuring quality of the gas purification. The inventors have found through researches that the duration of the gas purification stage is closely related to the volume of the build chamber. That is, if the volume of the build chamber is small, the duration of the gas purification stage is relatively short. If the volume of the build chamber is large, the duration of the gas purification stage will be relatively long. The internal volume of the build chamber used in the related art is often constant, which is not conducive to reducing the time that the gas purification stage speeds.

In view of the above problem, the invention provides a variable-volume build chamber. This is described in detail below

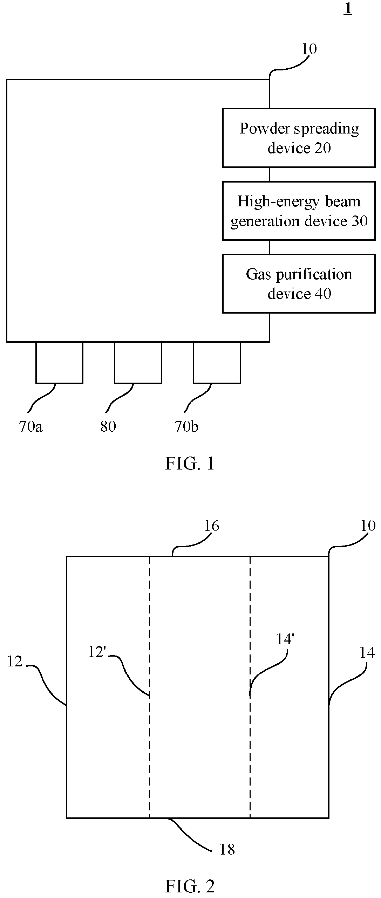

FIG. 1 is a schematic structural diagram of the additive manufacturing apparatus according to an embodiment of this application. As shown in FIG. 1, the additive manufacturing apparatus 1 includes a build chamber 10, a powder spreading device 20, a high-energy beam generation device 30, and a gas purification device 40. In addition to the above devices, the additive manufacturing apparatus 1 may further include other devices, for example, powder chambers 70a and 70b, and a build platform 80.

The powder spreading device 20 is configured to spread metal powder in the build chamber during an additive manufacturing stage. For example, the powder spreading device 20 spreads the metal powder in the powder chamber layer by layer on the build platform 80 using a mechanism for example, a roller.

The high-energy beam generation device 30 is configured to generate high-energy beams. The high-energy beams mentioned here may be laser or another type of ion beams. The high-energy beam generation device 30 can be driven by a specific motion mechanism to direct the high-energy beams toward the metal powder on the build platform 80, so that the metal powder is melted, and then solidified into a shape.

The gas purification device 40 is configured to fill the build chamber 10 with gas, for example, helium or argon, thereby discharging air out of the build chamber 10, so that the interior of the build chamber 10 is in an inert atmosphere.

Certainly, in some embodiments, the gas purification device 40 discharges the air out of the build chamber 10 by vacuuming, so that the build chamber is in a vacuum state.

The build chamber 10 has a variable volume. The build chamber 10 has a first volume corresponding to the additive manufacturing stage and a second volume corresponding to the gas purification stage, and the first volume is greater than the second volume. The first volume corresponding to the additive manufacturing stage means that throughout the additive manufacturing stage (or 3D printing stage), the volume of the build chamber 10 is the first volume. The second volume corresponding to the gas purification stage means that throughout the gas purification stage (that is, before one 3D printing process, or between two 3D printing processes), the volume of the build chamber 10 is the second volume. Since the second volume is less than the first volume, it is equivalent to using a small-volume build chamber 10 for gas purification throughout the gas purification stage, and restoring the large volume of the build chamber for additive manufacturing throughout the additive manufacturing stage. This can shorten the time that the gas purification spends and improve the device utilization.

The variable volume of the build chamber 10 may be implemented in various manners, which are described in detail below.

### Example 1 (not forming part of the invention)

The build chamber 10 includes a first wall portion 12 and a second wall portion 14 that are arranged opposite each other. The first wall portion 12 and the second wall portion 14 are movable relative to each other to change the volume of the build chamber 10.

In some implementations, the first wall portion 12 is motionless, while the second wall portion 14 is movable toward the first wall portion 12.

In some implementations, the second wall portion 14 is motionless, while the first wall portion 12 is movable toward the second wall portion 14.

In some implementations, the first wall portion 12 and the second wall portion 14 are both movable relative to each other.

In some implementations, as shown in FIG. 2, the build chamber 10 includes a top wall 16 and a bottom plate 18 that are arranged opposite each other. The first wall portion 12 and the second wall portion 14 mentioned above are respectively two side walls between the top wall 16 and the bottom plate 18.

In some implementations, the first wall portion 12 and the second wall portion 14 serve as the top wall 16 and the bottom plate 18, respectively.

Before the gas purification starts, the first wall portion 12 and the second wall portion 14 move towards each other to reduce the volume of the build chamber 10 (that is, the volume of the build chamber 10 changes to the second volume mentioned above). As shown in FIG. 2, the first wall portion 12 moves to a position indicated by A; and the second wall portion 14 moves to a position indicated by B. During the gas purification stage, the volume of the build chamber 10 is smaller, and therefore the gas purification can be completed quickly. After the gas purification is completed, the first wall portion 12 and the second wall portion 14 move opposite each other to restore the volume of the build chamber 10 (that is, the volume of the build chamber 10 changes to the first volume mentioned above).

The relative movement of the first wall portion 12 and the second wall portion 14 may be performed under the control of a movable device. The movable device may be implemented by, for example, a slide rail, and a gear rack.

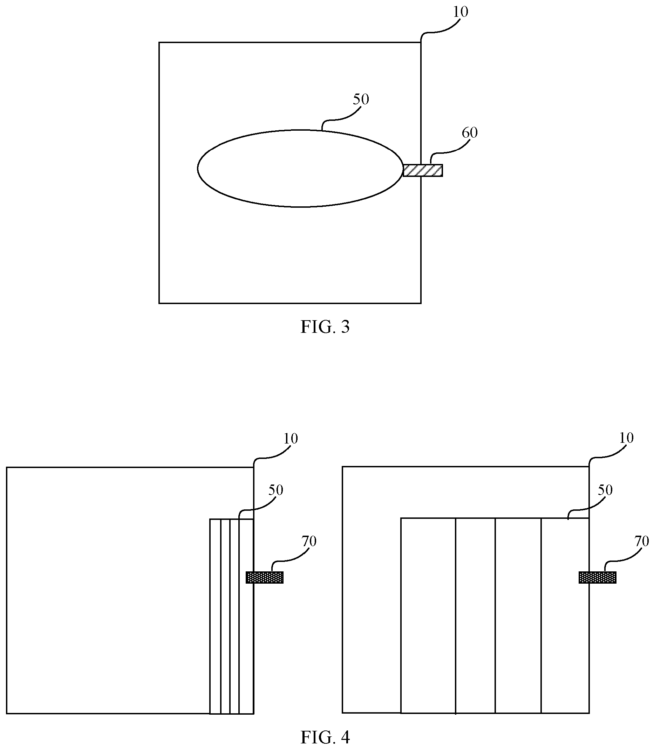

### Example 2 (the example relating to Fig. 3 is not forming part of the invention)

The additive manufacturing apparatus 1 includes an expandable device 50. The expandable device 50 is arranged inside the build chamber 10. The volume of the expandable device 50 has a contracted state and an expanded state. During the additive manufacturing stage, the volume of the expandable device 50 is in the contracted state; and during the gas purification stage, the volume of the expandable device 50 is in the expanded state. In other words, during the gas purification stage, the expandable device 50 expands and occupies a large space inside the build chamber 10, thereby reducing the space inside the build chamber 10 that needs to be processed with gas purification . During the additive manufacturing stage, the expandable device 50 contracts, so that the build chamber 10 can have enough room to produce an object.

An outer wall of the expandable device 50 is made of an airtight material, so as to be isolated from the air in the build chamber 10.

The expandable device 50 may be implemented in various manners. Examples of two possible implementations are given below with reference to FIG. 3 and FIG. 4.

As shown in FIG. 3, the expandable device 50 is a flexible expandable device. Further, in some implementations, the wall portion of the build chamber 10 is provided with an air flow channel 60 that is in fluid communication with the expandable device, so that the inflation and deflation of the flexible expandable device are achieved through the air flow channel 60.

For example, the air flow channel 60 is sealed to the side wall of the build chamber 10. The air flow channel 60 is opened or closed by a valve. The outer side of the air flow channel 60 is connected to a gas injection device (not shown in the figures). An end of the air flow channel 60 located on one side of the build chamber is connected to the flexible expandable device, and the flexible expandable device expands when filled with gas (where is should be noted that the flexible expandable device is isolated from the air in the build chamber 10). After the printing is completed, the flexible expandable device expands when filled with gas, and occupies the physical space inside the build chamber 10. The physical space can compress other space of the build chamber 10. If gas purification is performed at this time, the time that the gas purification spent can be greatly reduced. After the gas purification is completed, the valve is opened, and the flexible expandable device shrinks, thereby restoring the actual space of the build chamber 10.

In some examples, the flexible expandable device has a maximum expansion limit. When the gas purification process is a vacuuming process, the maximum expansion limit can ensure that the expandable device does not expand infinitely due to the vacuum degree in the build chamber, avoiding adulterating or impacting other components in the build chamber.

According to the invention and as shown in FIG. 4, the expandable device 50 is an accordion-style collapsible chamber (or a flexible folding chamber). The accordion-style collapsible is opened or closed inside the build chamber 10 under the control of the movable device. The movable device may be implemented by, for example, a slide rail and a gear rack.

For example, the accordion-style collapsible chamber is provided on one side of the build chamber 10. The flexible folding chamber is movable inside the build chamber under the traction of the movable device. For example, during the additive manufacturing process, the movable device can compress the folding chamber against one side of the build chamber 10 (as shown in the left drawing in FIG. 4). When gas purification is performed after the additive manufacturing is completed, the movable device pulls the folding chamber to occupy most of the space inside the entire build chamber 10 (as shown in the right drawing in FIG. 4), thereby reducing the absolute space inside the build chamber 10 and greatly shortening the gas purification. When the gas purification is completed, the movable device pulls the folding chamber to be compressed onto the side wall of the build chamber 10. In this example, the folding chamber is made of an airtight material, which can isolate the inside of the chamber form outside of the chamber to make the chamber airtight. In addition, a side wall of the folding chamber may be mounted with a valve 70 to connect the inside and outside of the folding of the chamber , so that the folding of the chamber can maintain the air pressure equal inside and outside during the movement and in an unfolded state.

In some embodiments, when the gas purification process is a vacuuming process, the accordion-style collapsible chamber has a specific strength, and therefore is protected from damages or deformation due to the vacuum state in the build chamber.

According to the invention, in order to cope with changes in the vacuum degree in the build chamber during the gas purification process, a double-layer folding chamber is provided. The outer layer has a specific strength to protect the outer layer form deformation due to changes in the vacuum degree in the build chamber. The inner layer is made of an airtight material and is flexible. When the folding chamber is filled with gas that comes from the outside so that the folding chamber occupies the space inside the build chamber, the inner layer maintains the designed shape under the action of the outer layer. It should be understood that when the folding chamber is a double-layered, the outer layer of the folding chamber is breathable or not.

In some examples not forming part of the invention, in order to maintain the pressure inside the build chamber at a safe threshold, a vacuum pump may be used to remove the air out of the build chamber during the gas purification process, and inert gas is introduced into the build chamber at the same time. This method can improve the gas purification efficiency, and also ensure that air pressure inside the build chamber is constant to prevent the build chamber from being damaged by an excessively high or low pressure. The damage includes but is not limited to deformation of the build chamber because pressure inside the build chamber is excessively low while outside the build chamber is excessively high.

## Claims

1. An additive manufacturing apparatus, comprising:
a variable-volume build chamber (10);
a powder spreading device (20), configured to spread powder to be formed in the build chamber during an additive manufacturing stage;
a high-energy beam generation device (30), configured to generate a high-energy beam during the additive manufacturing stage to process the powder;
a gas purification device (40), configured to perform a gas purification operation inside the build chamber (10) during a gas purification stage; and
an expandable device (50), arranged inside the build chamber (10), wherein the build chamber (10) has a first volume corresponding to the additive manufacturing stage and
a second volume corresponding to the gas purification stage, and the first volume is greater than the second volume,
the volume of the expandable device (50) has a contracted state and an expanded state; during the additive manufacturing stage, the volume of the expandable device (50) is in the contracted state; and
during the gas purification stage, the volume of the expandable device (50) is in the expanded state, the expandable device (50) is an accordion-style collapsible chamber,
**characterized in that** the collapsible chamber is a double-layer folding chamber including an outer layer and an inner layer, and the outer layer has such a strength that the outer layer is protected from deformation due to changes in a vacuum degree in the build chamber (10) and the inner layer is made of an airtight material and is flexible, and the inner layer maintains its designed shape under action of the outer layer when the folding chamber is filled with gas from outside so that the folding chamber occupies space inside the build chamber.

2. The additive manufacturing apparatus according to claim 1, wherein the build chamber (10)
comprises a first wall portion (12) and a second wall portion (14) that are arranged opposite each other,
and the first wall portion and the second wall portion are movable relative to each other to change the volume of the build chamber (10).

3. The additive manufacturing apparatus according to claim 2, wherein the build chamber (10) comprises:
a top wall (16); and
a bottom plate (18) arranged opposite the top wall (16), wherein
the first wall portion (12) and the second wall portion (14) are side walls arranged between the top wall (16) and the bottom plate (18).

4. The additive manufacturing apparatus according to claim 1, wherein an outer wall of the expandable device (50) is made of an airtight material.

## Patentansprüche

1. Eine Vorrichtung zur generativen Fertigung, die Folgendes beinhaltet:
eine Baukammer (10) mit variablem Volumen;
eine Pulverauftragseinrichtung (20), die konfiguriert ist, um während einer Stufe der generativen Fertigung zu formendes Pulver in der Baukammer aufzutragen;
eine Hochenergiestrahlerzeugungseinrichtung (30), die konfiguriert ist, um während der Stufe der generativen Fertigung einen Hochenergiestrahl zu erzeugen, um das Pulver zu verarbeiten;
eine Gasreinigungseinrichtung (40), die konfiguriert ist, um während einer Gasreinigungsstufe einen Gasreinigungsvorgang innerhalb der Baukammer (10) durchzuführen; und
eine expandierbare Einrichtung (50), die innerhalb der Baukammer (10) angeordnet ist, wobei
die Baukammer (10) ein erstes Volumen, das der Stufe der generativen Fertigung entspricht, und ein zweites Volumen, das der Gasreinigungsstufe entspricht, aufweist und das erste Volumen größer als das zweite Volumen ist,
das Volumen der expandierbaren Einrichtung (50) einen kontrahierten Zustand und einen expandierten Zustand aufweist; während der Stufe der generativen Fertigung das Volumen der expandierbaren Einrichtung (50) im kontrahierten Zustand ist; und
während der Gasreinigungsstufe das Volumen der expandierbaren Einrichtung (50) im expandierten Zustand ist,
die expandierbare Einrichtung (50) eine zusammenfaltbare Kammer vom Akkordeontyp ist,
**dadurch gekennzeichnet, dass** die zusammenfaltbare Kammer eine doppellagige Faltkammer ist, die eine Außenlage und eine Innenlage umfasst, und die Außenlage eine solche Festigkeit aufweist, dass die Außenlage vor Verformung aufgrund von Änderungen eines Vakuumgrads in der Baukammer (10) geschützt ist, und die Innenlage aus einem luftdichten Material hergestellt ist und flexibel ist und die Innenlage unter der Einwirkung der Außenlage ihre vorgegebene Form beibehält, wenn die Faltkammer von außen mit Gas gefüllt wird, sodass die Faltkammer Raum innerhalb der Baukammer einnimmt.

2. Vorrichtung zur generativen Fertigung gemäß Anspruch 1, wobei die Baukammer (10) einen ersten Wandabschnitt (12) und einen zweiten Wandabschnitt (14) beinhaltet, die einander gegenüberliegend angeordnet sind, und der erste Wandabschnitt und der zweite Wandabschnitt relativ zueinander beweglich sind, um das Volumen der Baukammer (10) zu ändern.

3. Vorrichtung zur generativen Fertigung gemäß Anspruch 2, wobei die Baukammer (10) Folgendes beinhaltet:
eine obere Wand (16); und
eine Bodenplatte (18), die der oberen Wand (16) gegenüberliegend angeordnet ist, wobei
der erste Wandabschnitt (12) und der zweite Wandabschnitt (14) Seitenwände sind, die zwischen der oberen Wand (16) und der Bodenplatte (18) angeordnet sind.

4. Vorrichtung zur generativen Fertigung gemäß Anspruch 1, wobei eine Außenwand der expandierbaren Einrichtung (50) aus einem luftdichten Material hergestellt ist.

## Revendications

1. Un appareil de fabrication additive, comprenant :
une chambre d'élaboration à volume variable (10) ;
un dispositif d'étalement de poudre (20), configuré pour étaler de la poudre à former dans la chambre d'élaboration pendant une étape de fabrication additive ;
un dispositif de génération de faisceau à haute énergie (30), configuré pour générer un faisceau à haute énergie pendant l'étape de fabrication additive de manière à traiter la poudre ;
un dispositif de purification de gaz (40), configuré pour effectuer une opération de purification de gaz à l'intérieur de la chambre d'élaboration (10) pendant une étape de purification de gaz ; et
un dispositif expansible (50), agencé à l'intérieur de la chambre d'élaboration (10), dans lequel
la chambre d'élaboration (10) a un premier volume correspondant à l'étape de fabrication additive et un deuxième volume correspondant à l'étape de purification de gaz, et le premier volume est plus grand que le deuxième volume,
le volume du dispositif expansible (50) a un état contracté et un état expansé ; pendant l'étape de fabrication additive, le volume du dispositif expansible (50) est dans l'état contracté ; et pendant l'étape de purification de gaz, le volume du dispositif expansible (50) est dans l'état expansé,
le dispositif expansible (50) est une chambre repliable de type accordéon,
**caractérisé en ce que** la chambre repliable est une chambre pliante à double couche incluant une couche externe et une couche interne, la couche externe présentant une résistance telle que la couche externe est protégée contre une déformation due à des changements de degré de vide dans la chambre d'élaboration (10), la couche interne étant réalisée en un matériau étanche à l'air et étant flexible, la couche interne conservant sa forme conçue sous l'action de la couche externe lorsque la chambre pliante est remplie de gaz depuis l'extérieur, de sorte que la chambre pliante occupe de l'espace à l'intérieur de la chambre d'élaboration.

2. L'appareil de fabrication additive selon la revendication 1, dans lequel la chambre d'élaboration (10) comprend une première portion formant paroi (12) et une deuxième portion formant paroi (14) qui sont agencées à l'opposé l'une de l'autre, la première portion formant paroi et la deuxième portion formant paroi pouvant être déplacées l'une par rapport à l'autre de manière à changer le volume de la chambre d'élaboration (10).

3. L'appareil de fabrication additive selon la revendication 2, dans lequel la chambre d'élaboration (10) comprend :
une paroi supérieure (16) ; et
une plaque inférieure (18) agencée à l'opposé de la paroi supérieure (16),
la première portion formant paroi (12) et la deuxième portion formant paroi (14) étant des parois latérales agencées entre la paroi supérieure (16) et la plaque inférieure (18).

4. L'appareil de fabrication additive selon la revendication 1, dans lequel une paroi externe du dispositif expansible (50) est réalisée en un matériau étanche à l'air.
